# EUROPEAN PATENT SPECIFICATION

(11) **EP 0 574 216 B1**
(45) Date of publication and mention of the grant of the patent: **18.11.1998**
(21) Application number: 93304409.1
(22) Date of filing: 07.06.1993
(51) Int. Cl.: H04N 5/92, H04N 5/783, H04N 5/94

(54) **Digital video tape recorder**
Digitaler Videobandrecorder
Enregistreur à bande vidéo numérique

(30) Priority: 08.06.1992 KR 991192
(43) Date of publication of application: 15.12.1993
(73) Proprietor: SAMSUNG ELECTRONICS CO., LTD., Suwon-city, Kyungki-do 441-373 (KR)
(72) Inventor: Yun, Jong-Kyoung, Suwon-city, Kyungki-do (KR)
(74) Representative: Read, Matthew Charles

(56) References cited:
- EP-A- 0 488 337
- DE-A- 3 915 664
- DE-A- 4 014 744
- US-A- 5 191 431
- PATENT ABSTRACTS OF JAPAN vol. 012, no. 418 (E-678)7 November 1988 & JP-A-63 155 877 (SONY) 29 June 1988
- IEEE INTERNATIONAL CONFERENCE ON CONSUMER ELECTRONICS, DIGEST OF TECHNICALPAPERS June 1989 , NEW YORK, US pages 124 - 125 XP75998 ITOI ET AL. 'A half inch consumer-use digital VCR'
- PATENT ABSTRACTS OF JAPAN vol. 016, no. 279 (E-1220)22 June 1992 & JP-A-04 068 884 (HITACHI) 4 March 1992
- PATENT ABSTRACTS OF JAPAN vol. 014, no. 502 (E-0997)2 November 1990 & JP-A-02 206 979 (SANYO) 16 August 1990
- PATENT ABSTRACTS OF JAPAN vol. 013, no. 222 (P-876)24 May 1989 & JP-A-01 035 702 (CANON) 6 February 1989

## Description

The present invention relates to a digital video tape recorder. More particularly, the present invention relates to a digital video tape recorder which is capable of recording different amounts of video information on the same amount of tape.

A well-known form of video tape recorder is the video cassette recorder (VCR). A VCR records video signals derived from, for example, a television or a video camera, onto a tape. The apparatus is usually provided with means to reproduce the recorded signal from the tape.

The amount of information which can be recorded onto the tape is limited, in part, by the speed at which the tape is transported through the video recorder. This has limited the usefulness of conventional video recorders. It has been proposed to extend the playing time of a video tape by reducing its speed by 1/N so that the effective recording time is increased by N times. Typically, a long play (LP) mode is provided wherein the tape speed is reduced by one half. Sometimes, a super long play (SLP) mode is provided, wherein the tape speed is reduced to 1/3 of the normal.

The standard tape speed of a VHS VCR is 33.34 mm per second for NTSC colour television signals and 23.39 mm per second for PAL and SECAM signals.

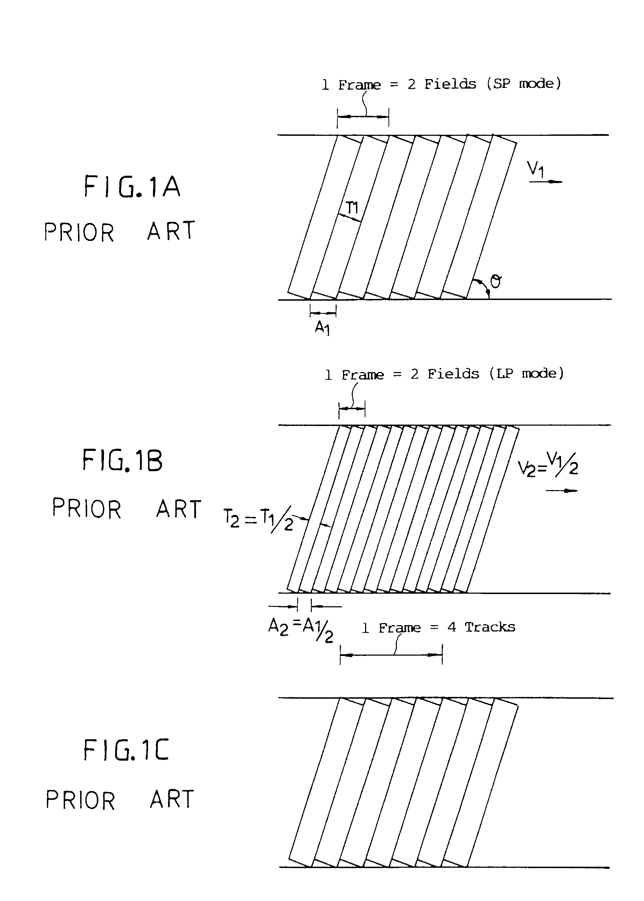

Figure 1 illustrates the way in which video signals are recorded on a tape in the prior art.

Referring to Figure 1A, if the tape speed is assumed to be V₁ the number of tracks per field to be T_{f}, and the number of fields per second (60 per second for NTSC) to be Tₛ, the track interval A₁ is defined by the following formula:${\text{A}}_{\text{1}} \text{=} \frac{{\text{V}}_{\text{1}}}{{\text{T}}_{\text{s}} {\text{x T}}_{\text{f}}}$

Thus, the track width T1 can be obtained by applying the following formula:${\text{T}}_{\text{1}} {\text{= A}}_{\text{1}} {\text{. Sinθ = V}}_{\text{1}} {\text{. Sinθ/(T}}_{\text{s}} {\text{x T}}_{\text{f}} \text{)}$

Thus, it is apparent that the track T1 is proportional to the speed V₁ but is inversely proportional to the number of fields per second Tₛ. Consequently, in a conventional analogue VCR the track width in LP mode is reduced by 1/2(T₂ - T₁/2) compared with the track width T₁ of the standard mode, as only the tape speed is reduced, in the present example by 1/2 (V₂-V₁/2).

Therefore, whilst extended recording is possible, if a reduction in track width is acceptable, there is a problem in that the reduction in track width results in increased crosstalk between the tracks giving rise to deterioration in the signal to noise ratio of the reproduced signal. Furthermore, it is necessary for separate heads to be provided for the standard and LP modes.

Figure 1C shows the recording track pattern formed on a tape of a digital video tape recorder. In a conventional digitial video tape recorder, the image signal data for one field is divided among two or more tracks. Accordingly, one frame of the image signal is divided among at least four tracks.

Figure 2 is a block diagram of a conventional digital video tape recorder.

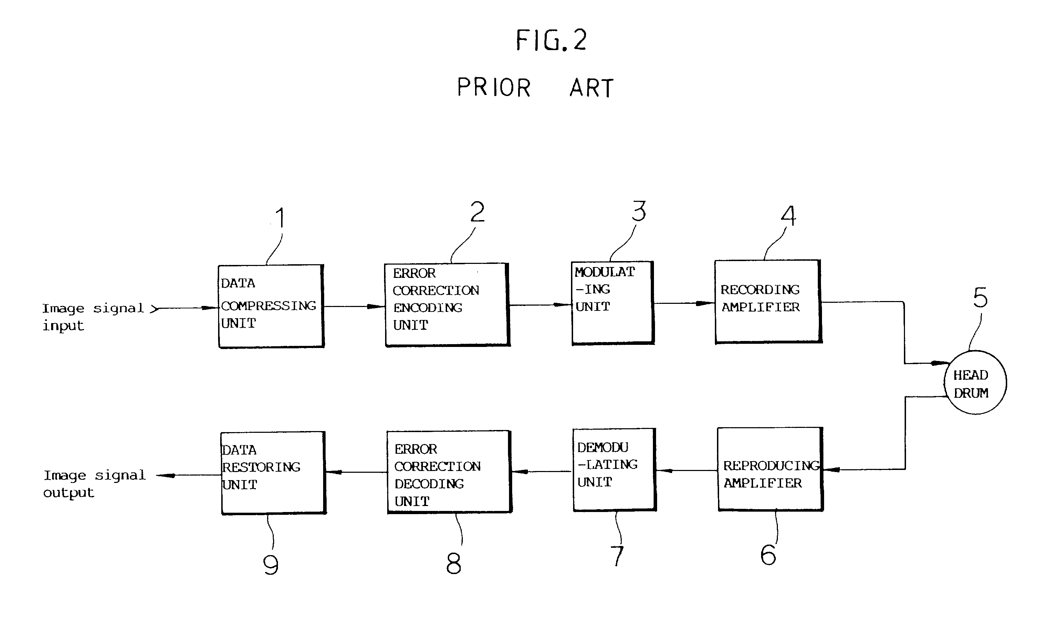

Referring to Figure 2, a data compressing unit 1 compresses an incoming digital image signal. The compression may be carried out by Discrete Cosine Transformation (DCT), the DCT coeficients being quantized and the resultant data further compressed using Huffman coding.

An error correction encoding unit 2, such as is disclosed in US-A-4 882 732, performs error correction encoding on the compressed image signal data.

A modulation unit 3 modulates the output of the error correction encoding unit 2. The output of the modulation unit 3 is then amplified by a recording amplifier 4 and supplied to recording heads, mounted on a head drum 5, for recording on a tape. The heads on the head drum 5 are also used to reproduce the image data recorded on the tape. The reproduced image data signals are amplified by a reproducing amplifier 6. A demodulating unit 7 then demodulates the output of the reproducing amplifier 6.

An error correction decoding unit 8 performs error correction decoding on the output of the demodulating unit 7.

A data expanding unit 9 expands the data output by the error correction decoding unit 8 into its original form.

If the tape speed is reduced by 1/N in a digital video tape recorder as shown in Figure 2, the track width becomes narrower and the resultant increase in crosstalk causes the signal to noise ratio to deteriorate.

JP-A-63-155877 addresses this problem by reducing the head drum speed and increasing the degree of video signal compression when the tape speed is reduced.

According to the present invention, there is provided a digital video tape recorder, selectively operable in a first mode or a second mode, comprising: a data compression means to compress a digital image signal by a first factor in said first mode and by a second factor, N times the first factor, in said second mode, N being a positive integer; a tape transport to drive a tape at a first tape speed in said first mode and at a second tape speed, 1/N times the first tape speed, in said second mode; a head drum to record a digital image signal, compressed by the data compression means, on a tape driven by the tape transport; a motor for driving the head drum, the head drum rotating at a first drum speed in said first mode and at a second speed, 1/N times the first drum speed, in said second mode; a microcomputer for producing a mode control signal; a frequency and phase signal generator mounted within the head drum for generating frequency generator signals and phase generator signals; a first amplifying and waveform shaping unit for receiving the frequency generator signals; a frequency divider for receiving the output of the first amplifying and waveform shaping unit, the frequency divider being responsive to the mode control signal from the microcomputer such that during second mode operation the frequency of the output of the first amplifying and waveform shaping unit is divided by N; a counter arranged to count clock signal pulses and be reset by the output of the frequency divider; a comparator for comparing the output of the counter with a reference value; a second amplifying and waveform shaping unit for receiving the phase generator signals; a delay for delaying the output of the second amplifying and waveform shaping unit in dependence on the mode control signal from the microcomputer such that during second mode operation the output of the second amplifying and waveform shaping unit is delayed N times as long as during first mode operation; a phase comparator for comparing the output of the delay with a reference signal to produce a phase difference signal; an adder for adding the outputs of the comparator and the phase comparator; a proportional-plus-integral-plus-derivative control circuit for receiving the output of the adder; and a motor current control unit for controlling the speed and phase of the head drum motor in accordance with the output of the proportional-plus-integral-plus-derivative control circuit.

Preferably, the data compression means comprises a first data compressor for compressing a digital video signal by said first factor, a second data compressor for compressing a digital video signal by said second factor and a switch for selectively passing the outputs of the data compressors, the first and second data compressors being arranged in parallel signal paths.

Preferably, a recorder according to the present invention includes data expansion means for expanding compressed data reproduced by the head drum from a tape. More preferably, the data expansion means comprises a first data expander, a second data expander and switching means, wherein said switching means is operable to cause the first data expander to be effective in said first mode and the second data expander to be effective in said second mode. Still more preferably, a recorder according to the present invention includes reproduced signal processing means comprising a reproducing amplifier for amplifying a signal reproduced by heads in the head drum, a demodulating unit for demodulating the output from the reproducing amplifier, an error correction decoding unit for performing error-correction decoding of the output of the demodulating unit, and said switching means being configured for selectively applying the output of the error correction decoding unit to the first and second data expanders for expanding data compressed according to said first and second factors respectively.

Preferably, a recorder according to the present invention includes an analogue-to-digital converter for converting an input analogue image signal into a digital signal and providing the digital signal to the compressing means.

Preferably, a recorder according to the present invention includes an error correction encoding unit for error-correction encoding the output of the compressing means, a modulating unit for modulating the output of the error correction encoding unit, and a record amplifying unit for amplifying the output of the modulating unit so that the output can be recorded on a tape. More preferably, a recorder according to the present invention includes a digital-to-analogue converter for converting digital image signals output from the data expanders into analogue signals.

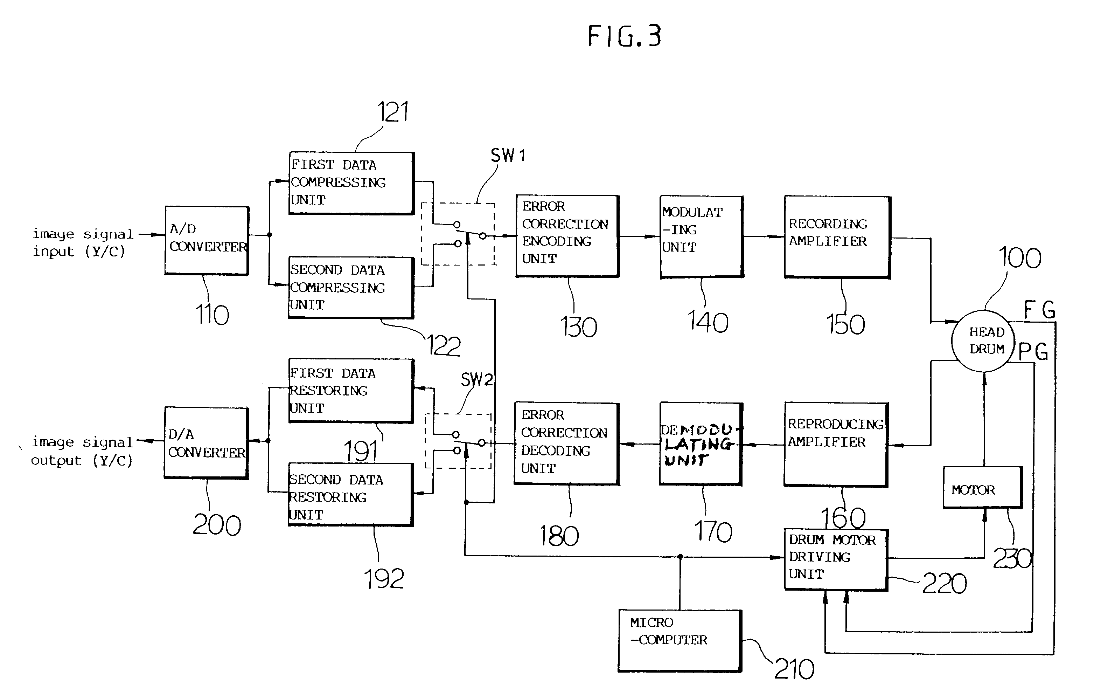

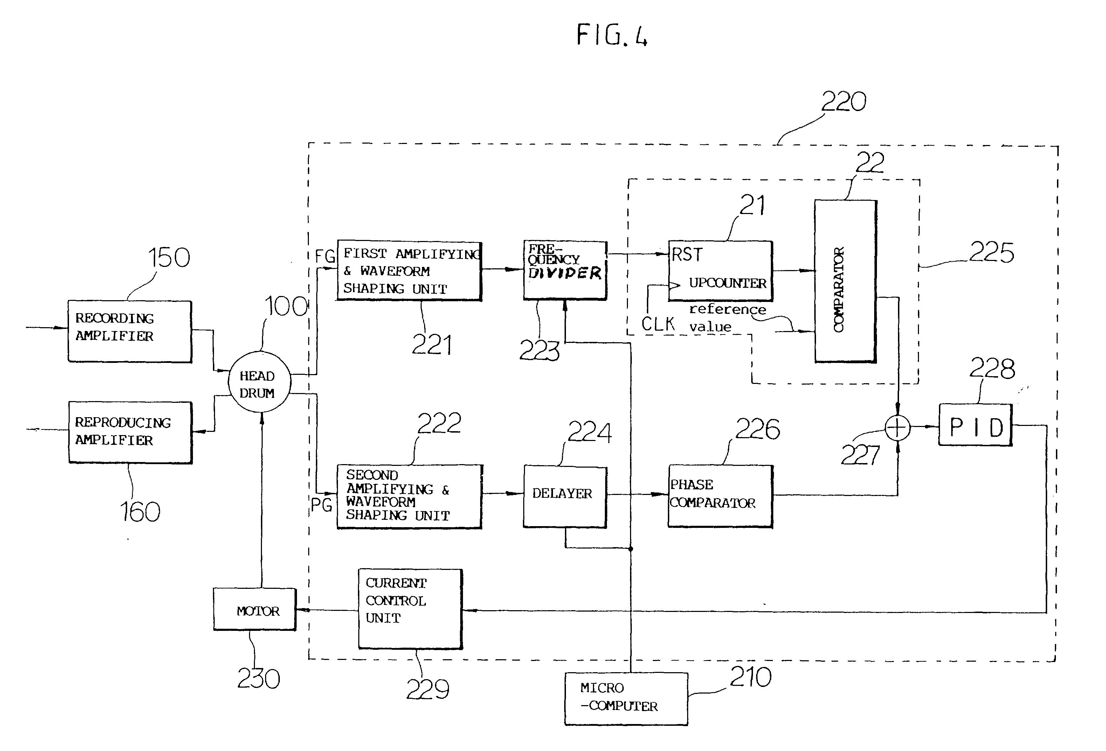

An embodiment of the present invention will now be described, by way of example, with reference to Figures 3 and 4 of the accompanying drawings, in which:
Figures 1(A), 1(B) and 1(C) illustrate the manner in which video signals are recorded on a tape;
Figure 2 is a block diagram of a conventional digital video recorder;
Figure 3 is a block diagram of a digital video recorder in accordance with the present invention; and
Figure 4 is a detail block diagram of the drum motor driving unit of Figure 3.

Referring to Figure 3, a data compressing means comprises an analogue-to-digital (A/D) converter 110 for converting an incoming image signal into a digital signal and first and second data compressing units 121, 122 for compressing the signal output by the A/D converter 110 by respective compression factors. A recording signal processing means comprises a first control switch SW1 for selecting the output of either the first or the second data compressing unit 121, 122; an error correction encoding unit 130 for performing error correction encoding on the output selected by the first control switch SW1; a modulating unit 140 for modulating the output of the error correction encoding unit 130; and a record amplifying unit 150 for amplifying the output of the modulating unit 140 so that the output can be recorded on a recording medium.

A head is installed on the head drum 100 and records the output of the record amplifying unit 150 on the recording medium. The head is also used to reproduce the recorded signal. A head control means comprises a motor 230 for driving the head drum 100; and a drum motor driving unit 220 for controlling the motor 230 in accordance with a mode control signal output by a microcomputer 210 to thereby vary the rotational speed of the head drum 100. The drum motor driving unit 220 receives a frequency generator FG signal and a phase generator PG signal output respectively by a frequency generator and a phase generator mounted within the head drum 100.

A reproduced signal processing means comprises a reproducing amplifier 160 for amplifying the signal reproduced by the head; a demodulating unit 170 for demodulating the output of the reproducing amplifier 160; an error correction decoding unit 180 for performing error correction decoding on the output of the demodulating unit 170; and a second control switch SW2 for selectively applying the output of the error correction decoding unit 180 to one of two output terminals in accordance with a standard mode or a long play mode.

A data restoring means comprises first and second data restoring units 191, 192 for expanding the compressed data output from the reproduced signal processing means by different expansion factors in accordance with current mode; and a digital-to-analogue D/A coverter 200 for converting the digital image signal output by either the first or second data restoring unit 191, 192 into an analogue signal.

The operation of the apparatus of Figure 3 will now be described in detail.

The analogue-to-digital A/D converter 110 converts the luminance and chrominance signals of an input image signal into a digital signal. The image signal may be derived from, for example, a received broadcast signal, a camera or a television.

The first data compressing unit 121 is a compressing unit for standard mode operation and performs data compression with half the compression factor of the second data compressing unit 122. In other words, after Discrete Cosine Transform (DCT) coefficients are quantized and coded by a variable length coding method, which is a standard compression encoding method, the DCT coefficients are compressed by Huffman coding to give a predetermined quantity of information for a predetermined plurality of DCT blocks. By way of example, if the information rate of the first data compressing unit 121 is 20Mbps, then the information rate of the second data compressing unit 122 is 10Mbps. Thus, the second data compressing unit 122 has a compression factor of 2 times that of the first data compressing unit 121.

If the apparatus is in standard mode, the microcomputer 210 produces a logic "1" as a mode control signal. If the mode control signal supplied to the first control switch SW1 is a logic "1", the switch SW1 selects the first data compressing unit 121. If the apparatus is in long play mode, the mode control signal is output by the microcomputer 210 as logic "0". The first control switch SW1 selects the second data compressing unit 122 in response to this signal.

The microcomputer 210 outputs the mode control signal in dependence on the operation of a key (not shown) by a user.

The error correction encoding unit 130 performs error correction encoding on the signals output by data compressing unit 121, 122 selected by the first control switch SW1. The modulating unit 140 modulates the signal encoded by the error correction encoding unit 130. The recording amplifying unit amplifies the output of the modulating unit 140, so that the output can be recorded on the recording medium. The head is mounted on the head drum 100 for recording the signal amplified from the record amplifying unit 150 on the recording medium and for the reproduction thereof.

The reproducing amplifier 160 amplifies the image signal, reproduced from the recording medium by the head mounted on the head drum 100. The demodulating unit 170 demodulates the signal, amplified by the reproducing amplifier 160. The error correcting decoding unit 180 performs error correction decoding on the signal demodulated by the demodulating unit 170.

The second control switch SW2 applies the output of the error correction decoding unit 180 to the first data restoring unit 191 when the mode control signal output from the microcomputer 210 is at logic "1". When the mode control signal is at logic "0", the output of the error correction decoding unit 180 is applied to the second data restoring unit 192.

The first and second data restoring units 191, 192 perform DCT decoding on the output of the error correction decoding unit 180 to recreate the original signal.

The expansion factor of the first data restoring unit 191 corresponds to the compression factor of the first data compressing unit 121 and is half that of the second data restoring unit 192. In other words, when the mode control signal is at logic "1", the first data compressing unit 121 and the first data restoring unit 191 are selected, and when it is at logic "0", the second data compressing unit 122 and second data restoring unit 192 are selected.

The D/A converter 200 converts the signals output by the first and second data restoring units 191, 192 into an analogue signal.

The mode control signal output by the microcomputer 210 is also supplied to the drum motor driving unit 220. The drum motor driving unit 220 controls the speed of the motor 230 according to the mode control signal and varies the rotational speed of the head drum 100. The speed of the head drum 100 during long play mode is half its speed during standard mode.

Referring to Figure 4, the drum driving unit 220, during long play mode, reduces the speed of the head drum by one half compared with the unit 220 during standard mode. The FG and PG signals output by the frequency generator and the phase generator are amplified and waveform-shaped at first and second amplifying/waveform shaping units 221, 222. A frequency divider 223 divides the frequency of the FG signal output by the first amplifying/waveform shaping unit 221 in response to the mode control signal output by the microcomputer 210. In other words, during extended mode, the frequency of the FG signal output by the first amplifying/waveform shaping unit 221 is divided by two.

A frequency discriminator 225 for counting a clock CLK comprises a counter 21, which is reset by the signal output by the first amplifying/waveform shaping unit 221, and a comparator 22 for comparing the count value of the counter 21 with a reference value. Accordingly, when an output of the first amplifying/waveform shaping unit 221 is applied to a reset terminal of the counter 21 in the frequency discriminator 225, the counter 21 is reset and counts until the next clock is received.

The comparator 22 compares the output of the counter 21 with a reference value (reference frequency). The comparator 22, upon comparison, outputs a logic "1" when the current drum rotational frequency is higher than the reference value, and when the current drum rotational frequency is lower than the reference value, the comparator 22 outputs a logic "0".

The drum speed is 3600 rpm in the case of standard mode operation, and 1800 rpm in the case of long play mode operation.

A delay 224 delays for a predetermined period of time the output of the second amplifying/waveform shaping unit 142 in response to the mode control signal output by the microcomputer 210. The PG signal output from the second amplifying/waveform shaping unit 142 is delayed twice as long during long play mode operation as in the standard mode operation.

A phase comparator 226 compares the phases of the PG signal and a preset reference signal. The reference signal is based on the vertical synchronizing signal of the image signal during recording, and during the reproducing, it is based on either an external synchronizing signal or an internally generated signal.

An adder 227 adds the output of the frequency discriminator 225 to a phase difference signal of the phase comparator 226 and outputs the result to a proportional plus integral plus derivative (PID) control unit 228. The PID unit 228 outputs a signal for controlling the speed and phase of the drum motor 230 to a current control unit 229 in accordance with the output of the adder 227. The current control unit 229 controls the rotational speed of the drum motor 230 in response to the output of the PID unit 228.

The following table sets out a comparison between a prior art long play mode and an extended mode according to the present invention.

**- Table 1 -**

| | conventional VCR | VCR of present invention | Remarks |
|---|---|---|---|
| Tape speed | 1/2 | 1/2 | Based on SP |
| Drum speed | 1 | 1/2 | Based on SP |
| Recorded information amount | 1 | 1/2 | Based on SP |
| Track width | 1/2 | 1 | Based on SP |
| Track number /field | 1 | 1/2 | Based on SP |
| Merit | A long time of recording/reproducing is possible | 1. A long time recording and reproducing is possible. | |
| | | 2. A clear picture can be provided by 2 heads because of the same tape width. | |
| | | 3. A S/N ratio is reduced to 3dB in case of VHS because performances of the channels recorded on the tape are identical. | |

In other words, as shown in the table 1, in a conventional VCR, the tape travelling speed during long play mode (LP mode) is one half of the standard mode (SP mode) tape speed. However, there is the problem of crosstalk occurring between the tracks due to the halving of the track width. Of course, one field of image signal is recorded on one track and all the data can be recorded without any compression of data, so that the recorded information amount is the same.

A VCR according to the present invention reduces the tape travelling speed and the rotary speed of the head drum by one half and at the same time, compresses the data by twice as much to thereby reduce the recorded information amount by one half, so that extended recording and reproduction is possible. Accordingly, because the track width in the long play mode and in the standard mode is identical, crosstalk between the tracks does not occur. As illustrated in Table 1, the image signal of one field is recorded on half of one track.

As seen from the foregoing, in the standard mode in accordance with the present invention, if one frame is allocated to 4 tracks, then one frame is allocated to 2 tracks in the long paly mode, so the data is two times as compressed as in the standard mode for recording and reproducing. Although in the present invention, the tape speed has to be varied according to the mode, a detailed explanation has been omitted since the manner by which this may be achieved is well known to the person skilled in the art.

As described in the foregoing, the digital image signal recording/reproducing apparatus and the associated method in accordance with the present invention maintain the track spacing in the same way as in the standard mode when the digital image signal is recorded on the recording medium, so that crosstalk between tracks is prevented.

It should be also noted that although the embodiment of the present invention described only included doubling the playing time of a tape, the described embodiment may be readily modified to extend the playing time of a tape by different amounts.

## Claims

1. A digital video tape recorder, selectively operable in a first mode or a second mode, comprising:
a data compression means (121, 122, SW1) to compress a digital image signal by a first factor in said first mode and by a second factor, N times the first factor, in said second mode, N being a positive integer;
a tape transport to drive a tape at a first tape speed in said first mode and at a second tape speed, 1/N times the first tape speed, in said second mode;
a head drum (100) to record a digital image signal, compressed by the data compression means (121, 122, SW1), on a tape driven by the tape transport;
a motor (230) for driving the head drum (100),
the head drum (100) rotating at a first drum speed in said first mode and at a second speed, 1/N times the first drum speed, in said second mode;
a microcomputer (210) for producing a mode control signal;
a frequency and phase signal generator mounted within the head drum (100) for generating frequency generator signals (FG) and phase generator signals (PG);
a first amplifying and waveform shaping unit (221) for receiving the frequency generator signals (FG);
a frequency divider (223) for receiving the output of the first amplifying and waveform shaping unit (221), the frequency divider (223) being responsive to the mode control signal from the microcomputer (210) such that during second mode operation the frequency of the output of the first amplifying and waveform shaping unit (221) is divided by N;
a counter (21) arranged to count clock signal pulses (CLK) and be reset by the output of the frequency divider (223);
a comparator (22) for comparing the output of the counter (21) with a reference value;
a second amplifying and waveform shaping unit (222) for receiving the phase generator signals (PG);
a delay (224) for delaying the output of the second amplifying and waveform shaping unit (222) in dependence on the mode control signal from the microcomputer such that during second mode operation the output of the second amplifying and waveform shaping unit (222) is delayed N times as long as during first mode operation; a phase comparator (226) for comparing the output of the delay (224) with a reference signal to produce a phase difference signal;
an adder (227) for adding the outputs of the comparator (22) and the phase comparator (226);
a proportional-plus-integral-plus-derivative (PID) control circuit (228) for receiving the output of the adder (227); and
a motor current control unit (229) for controlling the speed and phase of the head drum motor (230) in accordance with the output of the proportional-plus-integral-plus-derivative control circuit (228).

2. A recorder according to claim 1, wherein the data compression means (121, 122, SW1) comprises a first data compressor (121) for compressing a digital video signal by said first factor, a second data compressor (122) for compressing a digital video signal by said second factor and a switch (SW1) for selectively passing the outputs of the data compressors, the first and second data compressors (121, 122) being arranged in parallel signal paths.

3. A recorder according to claim 1 or 2, including data expansion means (191, 192, SW2) for expanding compressed data reproduced by the head drum (100) from a tape.

4. A recorder according to claim 3, wherein the data expansion means (191, 192, SW2) comprises a first data expander (191), a second data expander (192) and switching means (SW2), wherein said switching means (SW2) is operable to cause the first data expander (191) to be effective in said first mode and the second data expander (192) to be effective in said second mode.

5. A recorder according to any preceding claim, including an analogue-to-digital (110) converter for converting an input analogue image signal into a digital signal and providing the digital signal to the compressing means (121, 122, SW1).

6. A recorder according to any preceding claim, including an error correction encoding unit (130) for error-correction encoding the output of the compressing means (121, 122, SW1), a modulating unit (140) for modulating the output of the error correction encoding unit, and a record amplifying unit (150) for amplifying the output of the modulating unit so that the output can be recorded on a tape.

7. A recorder according to claim 4, including reproduced signal processing means comprising a reproducing amplifier (160) for amplifying a signal reproduced by heads in the head drum (100), a demodulating unit (170) for demodulating the output from the reproducing amplifier (160), an error correction decoding unit (180) for performing error-correction decoding of the output of the demodulating unit (170), and said switching means (SW2) being configured for selectively applying the output of the error correction decoding unit to the first and second data expanders (191, 192) for expanding data compressed according to said first and second factors respectively.

8. A recorder according to claim 7, including a digital-to-analogue converter for converting digital image signals output from the data expanders into analogue signals.

## Patentansprüche

1. Digitaler Videobandrecorder, der wahlweise in einer ersten Betriebsart oder einer zweiten Betriebsart betreibbar ist, mit
einer Datenkomprimierungseinrichtung (121, 122, SW1) zum Komprimieren eines digitalen Bildsignals in der ersten Betriebsart um einen ersten Faktor und in der zweiten Betriebsart um einen zweiten Faktor, der N mal der erste Faktor ist, wobei N eine positive ganze Zahl ist,
einem Bandtransport zum Antrieb eines Bandes in der ersten Betriebsart mit einer ersten Bandgeschwindigkeit und in der zweiten Betriebsart mit einer zweiten Bandgeschwindigkeit, die 1/N mal die erste Bandgeschwindigkeit ist,
einer Kopftrommel (100) zum Aufzeichnen eines durch die Datenkomprimierungseinrichtung (121, 122, SW1) komprimierten digitalen Bildsignals auf einem durch den Bandtransport angetriebenen Band,
einem Motor (230) zum Antrieb der Kopftrommel (100),
wobei die Kopftrommel (100) in der ersten Betriebsart mit einer ersten Trommeldrehzahl und in der zweiten Betriebsart mit einer zweiten Drehzahl, die N mal die erste Trommeldrehzahl ist, rotiert,
einem Mikrocomputer (210) zur Erzeugung eines Betriebsart-Steuersignals,
einem innerhalb der Kopftrommel (100) angebrachten Frequenz- und Phasensignalgenerator zur Erzeugung von Frequenzgeneratorsignalen (FG) und Phasengeneratorsignalen (PG),
einer ersten Verstärkungs- und Signalformungseinheit (221) zum Empfang der Frequenzgeneratorsignale (FG),
einen Frequenzteiler (223) zum Empfang des Ausgangssignals der ersten Verstärkungs- und Signalformungseinheit (221), wobei der Frequenzteiler (223) auf das Betriebsart-Steuersignal vom Mikrocomputer (210) reagiert, so daß während der zweiten Betriebsart die Frequenz des Ausgangssignals der ersten Verstärkungs- und Signalformungseinheit (221) durch N geteilt wird,
einem Zähler (21), der dafür eingerichtet ist, Taktsignalimpulse (CLK) zu zählen und durch das Ausgangssignal des Frequenzteilers (223) rückgesetzt zu werden, einem Vergleicher (22) zum Vergleichen des Ausgangssignals des Zählers (21) mit einem Referenzwert,
einer zweiten Verstärkungs- und Signalformungseinheit (222) zum Empfang der Phasengeneratorsignale (PG),
einer Verzögerung (224) zum Verzögern des Ausgangssignals der zweiten Verstärkungs- und Signalformungseinheit (222) in Abhängigkeit von dem Betriebsart-Steuersignal vom Mikrocomputer, so daß während der zweiten Betriebsart das Ausgangssignal der zweiten Verstärkungs- und Signalformungseinheit (222) N mal so lange wie während der ersten Betriebsart verzögert wird,
einem Phasenvergleicher (226) zum Vergleichen des Ausgangssignals der Verzögerung (224) mit einem Referenzsignal, um ein Phasendifferenzsignal zu erzeugen, einem Addierer (227) zum Addieren der Ausgangssignale des Vergleichers (22) und des Phasenvergleichers (226),
einer Proportional-plus-lntegral-plus-Ableitung(PID)-Steuerschaltung (228) zum Empfang des Ausgangssignals des Addierers (227), und
einer Motorstrom-Steuereinheit (229) zur Steuerung von Drehzahl und Phase des Kopftrommelmotors (230) in Übereinstimmung mit dem Ausgangssignal der Proportional-plus-lntegral-plus-Ableitung-Steuerschaltung (228).

2. Recorder nach Anspruch 1, bei dem die Datenkomprimierungseinrichtung (121, 122, SW1) einen ersten Datenkomprimierer (121) zum Komprimieren eines digitalen Videosignals um den ersten Faktor, einen zweiten Datenkomprimierer (122) zum Komprimieren eines digitalen Videosignals um den zweiten Faktor und einen Umschalter (SW1) zum wahlweisen Durchlassen der Ausgangssignale der Datenkomprimierer enthält, wobei der erste und der zweite Datenkomprimierer (121, 122) in parallelen Signalwegen angeordnet sind.

3. Recorder nach Anspruch 1 oder 2, mit einer Datenexpandierungseinrichtung (191, 192, SW2) zum Expandieren der durch die Kopftrommel (100) von einem Band wiedergegebenen komprimierten Daten.

4. Recorder nach Anspruch 3, bei dem die Datenexpandierungseinrichtung (191, 192, SW2) einen ersten Datenexpandierer (191), einen zweiten Datenexpandierer (192) und eine Umschalteinrichtung (SW2) enthält, wobei die Umschalteinrichtung (SW2) betreibbar ist, den ersten Datenexpandierer (191) in der ersten Betriebsart arbeiten zu lassen und den zweiten Datenexpandierer (192) in der zweiten Betriebsart arbeiten zu lassen.

5. Recorder nach einem der vorhergehenden Ansprüche, mit einem Analog-Digitalwandler (110) zum Umwandeln eines eingegebenen analogen Bildsignals in ein digitales Signal und zum Abgeben des digitalen Signals an die Komprimierungseinrichtung (121, 122, SW1).

6. Recorder nach einem der vorhergehenden Ansprüche, mit einer Fehlerkorrektur-Codiereinheit (130) zum Fehlerkorrektur-Codieren des Ausgangssignals der Komprimierungseinrichtung (121, 122, SW1), einer Moduliereinheit (140) zum Modulieren des Ausgangssignals der Fehlerkorrektur-Codiereinheit und mit einer Aufzeichnungs-Verstärkungseinheit (150) zum Verstärken des Ausgangssignals der Moduliereinheit, so daß das Ausgangssignal auf einem Band aufgezeichnet werden kann.

7. Recorder nach Anspruch 4, mit einer Wiedergabesignal-Verarbeitungseinrichtung, die einen Aufzeichnungsverstärker (160) zum Verstärken eines durch Köpfe in der Kopftrommel (100) wiedergegebenen Signals, eine Demoduliereinheit (170) zum Demodulieren des Ausgangssignals des Aufzeichnungsverstärkers (160) und eine Fehlerkorrektur-Decodiereinheit (180) zur Durchführung einer Fehlerkorrektur-Decodierung des Ausgangssignals der Demoduliereinheit (170) enthält, und wobei die Umschalteinrichtung (SW2) dafür eingerichtet ist, das Ausgangssignal der Fehlerkorrektur-Decodiereinheit wahlweise an den ersten und den zweiten Datenexpandierer (191, 192) anzulegen, um Daten, die in Übereinstimmung mit dem ersten bzw. dem zweiten Faktor komprimiert sind, zu expandieren.

8. Recorder nach Anspruch 7, mit einem Digital-Analog-Wandler zum Umwandeln von digitalen Bildsignalen, die von den Datenexpandierern ausgegeben werden, in analoge Signale.

## Revendications

1. Enregistreur à bande vidéo numérique, pouvant fonctionner de façon sélective dans un premier ou un second mode, comprenant :
un moyen (121, 122, SW1) de compression de données destiné, dans ledit premier mode, à comprimer un signal d'image numérique par un premier facteur et, dans ledit second mode, par un second facteur, de N fois le premier facteur, N étant un nombre entier positif ;
un mécanisme d'entraînement de bande pour entraîner une bande, dans ledit premier mode, à une première vitesse de bande et, dans ledit second mode, à une seconde vitesse de bande, de 1/N fois la première vitesse de bande ;
un tambour (100) de tête pour enregistrer un signal d'image numérique, comprimé par le moyen (121, 122, SW1) de compression de données, sur une bande entraînée par le mécanisme d'entraînement de bande ;
un moteur (230) destiné à entraîner le tambour (100) de tête,
le tambour (100) de tête tournant, dans ledit premier mode, à une première vitesse de tambour et, dans ledit second mode, à une seconde vitesse, de 1/N fois la première vitesse de tambour ;
un microcalculateur (210) destiné à produire un signal de commande de mode ;
un générateur de signal de fréquence et de phase, monté à l'intérieur du tambour (100) de tête, destiné à engendrer des signaux (FG) de générateur de fréquence et des signaux (PG) de générateur de phase ;
un premier module (221) d'amplification et de mise en forme de forme d'onde destiné à recevoir les signaux (FG) de générateur de fréquence ;
un diviseur de fréquence (223) destiné à recevoir la sortie du premier module (221) d'amplification et de mise en forme de forme d'onde, le diviseur (223) de fréquence étant sensible au signal de commande de mode issu du microcalculateur (210) de façon que, pendant le fonctionnement dans le second mode, la fréquence de la sortie du premier module (221) d'amplification et de mise en forme de forme d'onde soit divisée par N ;
un compteur (21) agencé pour compter des impulsions de signaux d'horloge (CLK) et pour être restauré par la sortie du diviseur de fréquence (223) ;
un comparateur (22) destiné à comparer la sortie du compteur (21) avec une valeur de référence ;
un second module (222) d'amplification et de mise en forme de forme d'onde destiné à recevoir les signaux (PG) de générateur de phase ;
un retardateur (224) destiné à retarder la sortie du second module (222) d'amplification et de mise en forme de forme d'onde en fonction du signal de commande de mode issu du microcalculateur, de façon que, pendant le fonctionnement dans le second mode, la sortie du second module (222) d'amplification et de mise en forme de forme d'onde soit retardée de N fois plus longtemps que pendant le fonctionnement dans le premier mode ;
un comparateur (226) de phase destiné à comparer la sortie du retardateur (224) avec un signal de référence pour produire un signal de différence de phase ;
un additionneur (227) destiné à additionner les sorties du comparateur (22) et du comparateur (226) de phase ;
un circuit (228) de régulation par action proportionnelle, intégrale et dérivée (PID) destiné à recevoir la sortie de l'additionneur (227) ; et
un module (229) de commande d'intensité de moteur destiné à commander la vitesse et la phase du moteur (230) de tambour de tête en fonction de la sortie du circuit (228) de régulation par action proportionnelle, intégrale et dérivée.

2. Enregistreur selon la revendication 1, dans lequel le moyen (121, 122, SW1) de compression de données, comprend un premier compresseur (121) de données destiné à comprimer un signal vidéo numérique par ledit premier facteur, un second compresseur (122) de données destiné à comprimer un signal vidéo numérique par ledit second facteur, et un commutateur (SW1) destiné à transmettre sélectivement les sorties des compresseurs des données, les premier et second compresseurs (121, 122) de données étant agencés suivant des trajets parallèles de signaux.

3. Enregistreur selon la revendication 1 ou 2, comprenant un moyen (191, 192, SW2) d'expansion de données destiné à expanser des données comprimées reproduites, à partir d'une bande, par le tambour (100) de tête.

4. Enregistreur selon la revendication 3, dans lequel le moyen (191, 192, SW2) d'expansion de données comprend un premier expanseur (191) de données, un second expanseur (192) de données et un moyen (SW2) de commutation, dans lequel ledit moyen (SW2) de commutation peut se mettre en oeuvre pour provoquer, dans ledit premier mode, la mise en service du premier expanseur (191) de données et, dans ledit second mode, la mise en service du second expanseur (192) de données.

5. Enregistreur selon l'une quelconque des revendications précédentes, comprenant un convertisseur (110) d'analogique en numérique destiné à convertir un signal d'image analogique d'entrée en un signal numérique et à délivrer le signal numérique au moyen (121, 122, SW1) de compression.

6. Enregistreur selon l'une quelconque des revendications précédentes, comprenant un module (130) de codage par code correcteur d'erreurs destiné à coder par code correcteur d'erreurs la sortie du moyen (121, 122, SW1) de compression, un module (140) de modulation destiné à moduler la sortie du module de codage par code correcteur d'erreurs, et un module (150) d'amplification d'enregistrement destiné à amplifier la sortie du module de modulation de façon à pouvoir enregistrer la sortie sur une bande.

7. Enregistreur selon la revendication 4, comprenant un moyen de traitement de signaux reproduits, comprenant un amplificateur (160) de reproduction destiné à amplifier un signal reproduit par des têtes du tambour (100) de têtes, un module (170) de démodulation destiné à démoduler la sortie de l'amplificateur (160) de reproduction, un module (180) de décodage par code correcteur d'erreurs destiné à effectuer un décodage par code correcteur d'erreurs de la sortie du module (170) de démodulation, et ledit moyen (SW2) de commutation étant configuré pour appliquer sélectivement la sortie du module de décodage par code correcteur d'erreurs aux premier et second expanseurs (191, 192) de données pour expanser les données compressées, respectivement, en fonction desdits premier et second facteurs.

8. Enregistreur selon la revendication 7, comprenant un convertisseur de numérique en analogique destiné à convertir, en signaux analogiques, des signaux d'image numériques sortis par les expanseurs de données.
